(19) **Europäisches Patentamt**
**European Patent Office**
**Office européen des brevets**

(11) **EP 4 215 877 A1**

(12) # EUROPEAN PATENT APPLICATION

(43) Date of publication:
**26.07.2023 Bulletin 2023/30**

(21) Application number: **22152737.7**

(22) Date of filing: **21.01.2022**

(51) International Patent Classification (IPC):
**G01C 21/36** (2006.01)    **B60W 40/02** (2006.01)
**G08G 1/01** (2006.01)

(52) Cooperative Patent Classification (CPC):
**G01C 21/3691; B60W 40/02; G08G 1/0112;**
**G08G 1/0129; G08G 1/0141; G08G 1/096716;**
**G08G 1/096741; G08G 1/09675; G08G 1/096775**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Klimator AB**
**405 30 Göteborg (SE)**

(72) Inventors:
- **HAGBERG, Peter**
  **Varberg (SE)**
- **ANDERSSON, Emil**
  **Göteborg (SE)**

(74) Representative: **Westpatent AB**
**Almekärrsvägen 11**
**443 39 Lerum (SE)**

(54) **A METHOD AND SYSTEM FOR DETERMINING AN OPTIMIZED FORECAST RELATING TO WEATHER OR A ROAD CONDITION**

(57) The present disclosure relates to a method for operating a computer-based system (10) in a vehicle (2), for determining an updated and optimized forecast relating to at least a weather or a road condition of a road section (3) in a network (1) of roads, said method comprising the following steps: providing a first set of data (6) from a remote provider (4) of information related to at least a weather or a road condition in at least said road section (3), said first set of data (6) corresponding to said forecast; transmitting said first set of data (6) to said vehicle (2); and providing a second set of data (9) based on at least the operation of the vehicle (2) or present conditions in the surroundings of the vehicle (2). Furthermore, said method comprises the steps of: combining, in said computer-based system (10), said first set of data (6) with said second set of data (9) for obtaining said updated and optimized forecast; and providing the updated and optimized forecast to a user. The disclosure also relates to a computer-based system (10) in a vehicle (2), for determining said updated and optimized forecast.

Fig. 1

EP 4 215 877 A1

**Description**

TECHNICAL FIELD

The disclosure relates to a method for operating a computer-based system in a vehicle, for determining an updated and optimized forecast relating to at least a weather or a road condition of a road section in a network of roads, said method comprising the following steps: providing a first set of data from a remote provider of information related to at least a weather or a road condition in at least said road section, said first set of data corresponding to said forecast; transmitting said first set of data to said vehicle; and providing a second set of data based on at least the operation of the vehicle or present conditions in the surroundings of the vehicle.

The disclosure also relates to a computer-based system for carrying out a method as mentioned above.

BACKGROUND

It is of great importance that today's infrastructure with networks of roads for different types of vehicles can be used with a high level of safety and efficiency. For this reason, it is important to provide updated and detailed knowledge regarding the status of such a network of roads, both for vehicle drivers and for road transport companies and authorities which are dependent on road transports.

For example, it is of importance for a vehicle driver to have knowledge of weather-related conditions such as the presence of snow or ice on a particular road section. Such information is crucial both as regards the safety when travelling on the road in question and also as regard the expected time it may take to travel a certain distance to reach a certain goal.

In particular, there is a need for drivers and owners of trucks, buses and other private companies and public authorities in the transport business to be quickly informed in the event that weather-related problems arise on certain roads and also how and when the roads can be expected to be available for travel. Furthermore, it is financially beneficial for trucking companies if accurate and updated information related to the status of road networks is available. Such companies can increase their efficiency by redirecting trucks to roads being in good driving conditions if, for example, the weather suddenly changes. Also, maintenance companies can increase their efficiency by prioritizing certain roads which may be in need of quick and efficient maintenance efforts.

For drivers of for example police cars, ambulances and fire trucks, information regarding the condition of certain roads or networks of roads is of high importance. With information describing for example that certain roads are very icy or snowy, the driver can decide whether an alternative road might be faster or safer, or both.

According to known technology, the status and condition of the road in a defined road network at a given point in time can be determined with the aid of knowledge of the current and expected weather, and also by means of other criteria which determines the condition and status of a particular road. Such criteria may for example include the occurrence of ice or water on the surface of the road, the expected friction between the tyres of a vehicle and the road surface, the air temperature and also the road temperature. Many other criteria may also be taken into account.

The condition of the road surface also depends on e.g. whether there has been any road service recently involving, for example, snow ploughs and similar equipment.

In order to obtain accurate information regarding the status and condition of a road network in a certain geographic location, information related to forecasts regarding weather conditions can generally be provided by means of institutions such as national weather agencies. Such institutions rely on weather stations which provide information about the weather in a certain region. However, such information can be unreliable. One source of uncertainty is the fact that such forecast information is often locally based. For roads located just a short distance from the weather station, the weather situation may be completely different. Also, changes in weather conditions or road conditions may occur very quickly. Normally, weather information from the above-mentioned institutions is updated every hour. During such a time period, the weather may change considerably in different road sections. This also contributes to the uncertainty of the forecasts from the institutions.

It should be noted that it is also previously known to provide enriched forecasts, which take into account additional parameters and also aggregated data from for instance fixed weather stations.

Also, information regarding, and detection of, other events such as activities related to road maintenance can be helpful to obtain an accurate forecast.

For the reasons stated above, there is a general requirement to obtain improved and optimized information related to weather and road status which is available from fixed weather stations and institutions offering such information.

The patent document US 9799219 teaches an arrangement in which weather data from a weather communication centre is transmitted to a remote server and further to navigation units which are arranged in vehicles. Each vehicle which uses the arrangement also has a number of control units which are used to provide data which is related to local weather conditions. Said document also teaches that weather data can be modified in the server based on data from the vehicle.

Even though the system according to US 9799219 constitutes a useful arrangement for providing weather-related data, there is a need for improved arrangements and methods within the technical field in question. Generally, there is a need for quick and correct adjustments of preliminary weather forecasts, in order to decrease the degree of uncertainty of such forecasts and to improve the weather and road information for different types of users of such information.

SUMMARY

In accordance with the disclosure, there is provided a method and a system having a purpose of solving one or more of the drawbacks of known devices within this field.

For this reason, and in accordance with the disclosure, there is provided a method for operating a computer-based system in a vehicle, for determining an updated and optimized forecast relating to at least a weather or a road condition of a road section in a network of roads. The method comprises the following steps: providing a first set of data from a remote provider of information related to at least a weather or a road condition in at least said road section, said first set of data corresponding to said forecast; transmitting said first set of data to said vehicle; and providing a second set of data based on at least the operation of the vehicle or present conditions in the surroundings of the vehicle. In particular, the method furthermore comprises the following steps: combining, in said computer-based system, said first set of data with said second set of data for obtaining said updated and optimized forecast; and providing the updated and optimized forecast to a user.

Certain advantages are achieved by means of the dispenser system according to the disclosure. In particular, due to the fact that a computer-based system in each of the actual vehicles which are travelling on the network of roads can be arranged for providing said updated and optimized forecast, a very quick and highly accurate correction and update of a preliminary forecast in these vehicles can be made. Also, the fact that the update is carried out within the hardware of the vehicle itself allows the method to be carried out without the need for a continuous online connection with any external server system.

According to an embodiment, the first set of data may be provided in the form of a set of parameters (P) indicating road condition information being associated with said road section and being valid during a pre-determined period of time.

According to an embodiment, said first set of data may be provided in the form of at least one of the following parameters (P1-P7), which are provided as either values or probability distributions:

- a temperature value of the road surface of said road section;
- an amount of precipitation being collected on the road surface of said road section;
- an air temperature associated with said road section;
- a dew point associated with said road section;

- a wind speed associated with said road section;
- a road condition class associated with said road section;
- a friction coefficient of the road surface of said road section;
- a hazard level associated with said road section; and
- a slipperiness indication associated with said road section.

According to an embodiment, at least one of said parameters (P1-P7) may be associated with a predicted uncertainty related to a deviation of a parameter value or a probability related to a parameter, at a given point in time.

According to an embodiment, access to said parameters may be allowed via an online application programming interface (API).

According to an embodiment, said second set of data (10) may be provided by onboard system data obtained in said vehicle; said onboard system data corresponding to a road condition presently existing in the vicinity of said vehicle, an environmental condition in the surroundings of the vehicle, or a current condition of operation of the vehicle, or any combination of said conditions.

According to an embodiment, said onboard system data may be provided in the form of measurement data from at least one sensor system arranged in the vehicle.

According to an embodiment, said measurement data may be provided from at least one of the following sensors or signals being associated with the sensor system in the vehicle:

- a laser-based sensor or signal;
- a temperature sensor or signal;
- a wheel-slip sensor or signal;
- a traction control sensor or signal;
- a rain sensor or signal;
- a Lidar sensor or signal;
- an ESP activation signal; and
- an optical sensor or camera;

said measurement data indicating information related to at least one of the following parameters related to said road section:

- a road friction coefficient;
- a hazard level;
- a road surface temperature;
- a road condition class; and

a slipperiness indication associated with said road section.

According to an embodiment, said first set of data may be combined with said second set of data in a fusion process which may involve a pre-processing stage or a fusion algorithm stage or a post-processing stage, or a combination of said stages.

According to an embodiment, an output set of data may be fed from said fusion process to at least one of the following destinations:

- an application in said vehicle related to advanced driver-assistance systems (ADAS) or autonomous driving (AD);
- an online application programming interface (API); and
- a remote storage for said output set of data.

According to an embodiment, there may be provided a pre-processing stage which compensates for detected faults or ignorances in said computer-based system or related to said second set of data.

According to an embodiment, there may be provided a fusion algorithm stage comprising a prediction and updating process implemented by means of Kalman filtering and smoothing, or any other suitable similar algorithm.

According to an embodiment, there may be provided a post-processing stage utilizing a fused posterior distribution of output data.

The disclosure also relates to a computer-based system in a vehicle, for determining an updated and optimized forecast relating to at least a weather or a road condition of a road section in a network of roads. The system comprises: a vehicle communication unit which is configured for receiving a first set of data of information related to at least a weather or a road condition in at least said road section from a remove provider, said first set of data corresponding to said forecast; and a set of sensor devices providing a second set of data based on at least the operation of the vehicle or present conditions in the surroundings of the vehicle. Furthermore, said system is furthermore configured to combine said first set of data with said second set of data for obtaining said updated and optimized forecast, and for providing the updated and optimized forecast to a user.

Further advantages and advantageous features of the embodiments contemplated herein are disclosed in the following description and in the dependent claims.

BRIEF DESCRIPTION OF THE FIGURES

The disclosure will be described in greater detail below with reference to the figures shown in the appended drawings.

Figure 1     shows a simplified view of a network of roads in which the method and system according to the disclosure can be used;

Figure 2     shows a schedule of a system which is configured to implement the method according to the disclosure;

Figure 3     shows an alternative view of a system for implementing the method according to the disclosure;

Figure 4     shows the basic concept of a sensor fusion concept; and

Figure 5     shows a simplified visualization of the functionality of the fusion method according to the disclosure.

DETAILED DESCRIPTION OF PARTICULAR EMBODIMENTS

Different aspects of the present disclosure will be described more fully hereinafter with reference to the enclosed drawings. The disclosure can be realized in many different forms and should not be construed as being limited to the embodiments below.

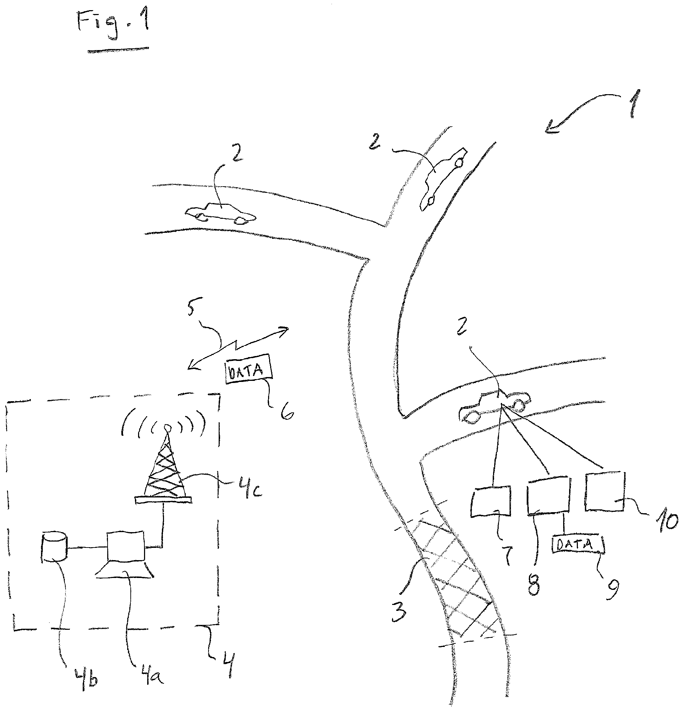

With initial reference to Figure 1, there is shown an overview of a conventional network 1 of roads on which vehicles may travel. Purely as examples, a number of vehicles 2 are indicated in Figure 1. For the purpose of describing the principles of this disclosure, a particular vehicle 2 can be described as travelling on a particular road of the network 1. It is assumed that there is a need for information related to road surface conditions and suitably also weather conditions on a certain road section 3 on which it can be expected that any of the vehicles 2 will travel (or is currently travelling on).

In the context of this disclosure, the term "road section" is used to describe a selected section, distance or length of a road in which it is possible to prepare a forecast of for example a weather condition or a road surface condition. More precisely, a road section 3 can be located where a vehicle 2 is currently travelling, or it can alternatively be where a vehicle 2 is intended to be travelling at a future point in time, as shown in Figure 1. The latter case can be relevant when a vehicle 2 is provided with a navigation system in which a certain route for travelling has been determined by the driver of the vehicle 2. According to known technology, a navigation system which is used in a vehicle 2 will contain a memory unit having information on upcoming road sections 3 on which the vehicle will travel in order to reach a predetermined destination.

A road section 3 may vary in length, suitably from a few meters up to 750 meters based for example on the property variation of the surface of the road section 3 in question. Structures such as for example a bridge has unique properties from its connecting roads and will be isolated and may thus be regarded as a unique road section, whereas a strip such as a flat uniform highway most likely results in longer road sections.

According to a further example, the term "road section" can also be used to specify sections on virtually all the roads which are located within a given radius from the current position of a certain vehicle in the network 1 of roads.

As mentioned initially, vehicles 2 which are travelling on the network 1 of roads may obtain access to data related to weather and road status which is supplied via a remote provider of such information, as shown in a simplified form by means of reference numeral 4 in Figure 1. Such a remote provider 4 can be in the form of a private company or a national or regional institution which supplies forecasts related to weather and road condition information to different types of users, for example transport companies, authorities and also to individual drivers of vehicles.

As shown in Figure 1, the remote provider 4 comprises at least a computer server 4a, a database 4b associated with the server 4a, and also a communication unit 4c. The remote provider 4 can be regarded as being "remote" in the sense that it can be physically located at a short or long distance from both the network of roads 1 and from the vehicles 2, so that information related to said forecasts is suitably communicated via the communication unit 4c which is configured for providing a wireless communication channel 5. As is commonly known, such a communication channel 5 is constituted by a conventional link or channel which transmits data via an internet connection or alternatively via any other known wired or wireless communication connection.

The remote provider 4 is arranged for transmitting data related to information corresponding to a forecast of weather conditions or road surface conditions, or both, via the communication unit 4c and the communication channel 5. Such information is here referred to as a "first set of data", as shown with reference numeral 6 in Figure 1. The transmission of such a forecast reaches the network 1 of roads via the communication channel 5. In particular, the information in the first set of data 6 is suitably arranged so that it comprises a separate forecast for the road element 3 as mentioned above as well as separate forecasts for any other road element which can be said to form part of the network 1 of roads. The remote provider 4 may also transmit a more complete forecast covering the entire network 1 of roads as a whole. The information which is covered by the first set of data 6 will be described in greater detail below.

In addition to data related to a forecast of weather conditions and road surface conditions, the remote provider 4 may also transmit other related information, such as information on the formation of traffic congestion and queues.

Furthermore, each one of the vehicles 2 which are within the network 1 or roads and within the transmission range of the communication unit 4c is provided with its own vehicle communication unit 7, which is adapted for wireless communication. The vehicle communication unit 7, which is shown for only one of the vehicles 2 in Figure 1, is furthermore configured for detecting and receiving the first set of data 6, which means that the vehicle 2 in question has access to information related to the forecast as supplied by the remote provider 4. It is obvious that the driver of each vehicle 2 is mainly interested in information which is relates to those road sections 3 on which the vehicle 2 is intended to be travelling on.

The forecast information from the remote provider 4 is suitably transmitted to one or more vehicles 2 as a result of the vehicle 2 sending a request for such information via the vehicle communication unit 7 to the remote provider 4.

Furthermore, each vehicle 2 as shown in Figure 1 is provided with a sensor system in the form of a set 8 of sensor devices which are configured for providing a second set of data 9 in the form of onboard system data, i.e. data which is consequently obtained in the vehicle 2 itself. Such data can be used for detecting certain parameters related to the existing road surface condition or weather conditions, or both, in the vicinity of the vehicle 2. The second set of data 9 can also be based on the actual operation of the vehicle 2 and the manner in which the operation of the vehicle 2 depends on the current weather and road conditions. The information which is related to said second set of data 9 will be described in greater detail below.

Furthermore, each vehicle 2 which is configured for operating in accordance with the disclosure, is provided with a computer-based control system 10 which is arranged in the vehicle 2 and which is configured for receiving and processing the first set of data 6 and the second said of data 9 in order to provide an updated and optimized forecast, i.e. as compared with the original forecast provided by the remote provider 4. The control system 10 can furthermore be configured for transmitting a request directed to the remote provider 4 in order to obtain forecast data in that or those road sections 3 which may be relevant for the corresponding vehicle 2 to travel on.

In summary, the present disclosure relates to a method for operating a computer-based system 10 in a vehicle 2 for determining an updated and optimized forecast relating to at least a weather or a road condition of a road section 3 in a network 1 of roads. Generally, the method comprising the following steps: providing a first set of data 6 from a remote provider 4 of information related to at least a weather or a road condition in at least said road section 3, wherein the first set of data 6 corresponds to said forecast; transmitting the first set of data 6 to the vehicle 2; and providing a second set of data 9 based on at least the operation of the vehicle 2 or conditions in the surroundings of the vehicle 2. Furthermore, as generally described above, the method also comprises the following steps: combining, in said computer-based system 10, said first set of data 6 with said second set of data 9 for obtaining the updated and optimized forecast; and providing the updated and optimized forecast to a user.

The fact that the process of combining the first set of data 6 and the second set of data 9 is carried out in each one of the vehicles 2, which are configured for implementing the above-mentioned method, leads to a process of optimizing a forecast from the remote provider 4 which is implemented in the vehicle's 2 own hardware and software. This means that this optimizing process is independent from continuous communication with, for example, a centralized computer server having forecast information or other information regarding the road condition in the road sections which are of interest. More precisely, the process according to this disclosure is implemented partly by means of the centralized computer server 4a in order to obtain general forecast information. However, this is not needed during the process of updating and optimizing the forecast. This means that a further advantage is provided during the updating and optimizing process (which is implemented in the vehicle 2) since it is much faster than a corresponding process implemented by means of communication with a cloud server. This means that an estimated and optimized condition for a road section 3 can be determined before the vehicle 2 reaches said road section 3.

According to the embodiment shown in Figure 1, the above-mentioned first set of data 6 from the remote provider 4 is constituted by a set of parameters (P) which together indicate road condition information which is associated with the road section 3. Such road condition information is suitably valid during a pre-determined period of time, after which it can be replaced with updated forecast data. It can be expected that the road condition information is updated by the remote provider 4 every 15 or 30 minutes, for example.

As a non-exhaustive list of examples, the following parameters ($P_1$-$P_n$) can be provided and transmitted by the remote provider 4:

- a temperature value of the road surface of said road section 3;
- an amount of precipitation being collected on the road surface of said road section 3;
- an air temperature associated with said road section 3;
- a dew point associated with said road section 3;
- a wind speed associated with said road section 3;
- a road condition class associated with said road section 3;
- a friction coefficient of the road surface of said road section 3;
- a hazard level associated with said road section 3; and
- a slipperiness indication associated with said road section 3.

The parameters ($P_1$-$P_n$) can be provided either in the form of values or in the form of probability distributions. As an example, a first parameter (Pi) can be provided in the form of a temperature value being expressed as an expected temperature T with a range within the temperature is expected to be, i.e. $T_1 \pm$ x degrees centigrade. As a further example, a parameter such as "road condition class" mentioned above may be provided in the form of a set of probabilities, such as the following information: "probability for dry road = 0%"; "probability for wet road = 10%"; "probability for snow on the road = 70%"; "probability for ice on the road = 20%".

Consequently, each parameter is generally associated with a predicted uncertainty which is related to a deviation of the parameter value or a probability related to a parameter, and which is valid at a given point in time.

Furthermore, the parameters from the remote provider 4 are available over an online application programming interface (API). The coordinates in latitudes and longitudes for the position of interest can be sent by a vehicle 2 to the API which finds the nearest road section and returns all parameters associated with that road section. Consequently, a prediction of the current state of the road section as regards weather and road condition is provided by the remote provider 4.

Furthermore, and according to the embodiment shown in Figure 1, the second set of data 9 is provided by an onboard system and is obtained in each vehicle 2. The onboard system data corresponds to a road condition which is presently existing in the vicinity of the vehicle 2, or alternatively an environmental condition in the surroundings of the vehicle 2, or alternatively a current condition of operation of the vehicle 2, or any combination of these conditions. Furthermore, the onboard system data can be provided in the form of measurement data from at least one sensor system 8 which is arranged in the vehicle 2.

For example, the sensor system 8 may comprise a laser sensor which can be used together with a camera and a computing unit in order to predict the road condition up to approximately 20 meters in front of the vehicle 2. Generally, the sensor system 8 could be configured to provide measurement data from a number of sensors or signals in the vehicle 2 so as to provide, for example, one or more of the following signals:

- a laser-based sensor or signal;
- a temperature sensor or signal;
- a wheel-slip sensor or signal;
- a traction control sensor or signal;
- a rain sensor or signal;
- a Lidar sensor or signal;
- an ESP activation signal; and
- an optical sensor or camera.

The measurement data which is provided by means of the sensor system 8 will be used to provide information of at least one of the following parameters which are related to the road section 3:

- a road friction coefficient;
- a hazard level;
- a road surface temperature;
- a road condition class and
- a slipperiness indication associated with said road section.

Preferably, the parameters originating from the sensor system 8 are accompanied with a predicted uncertainty describing what the deviation is for each parameter at a given time instance. The same principles regarding a predicted uncertainty which is applied to different parameters are used for the first set of data 6 and the second set of data 9.

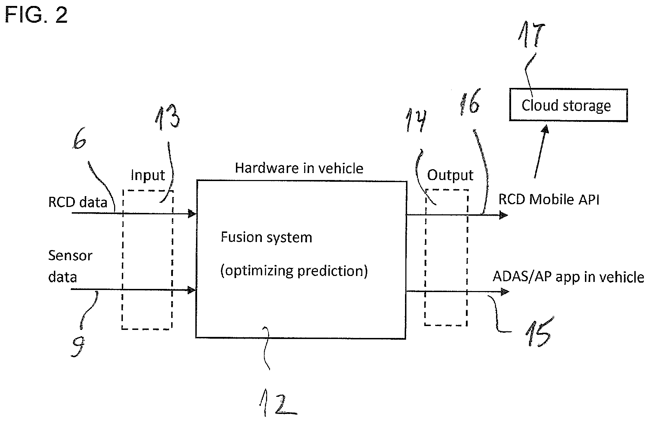

According to an embodiment, the first set of data 6 are combined, or fused, with said second set of data 9 in a fusion process, which now will be described in greater detail with reference to Figure 2. The fusion process is implemented by means of a fusion system 12, which is suitably implemented in a computer hardware unit in each vehicle 2. It is an important feature of the method according to this disclosure that it can be implemented in many different types of hardware arrangements in different vehicle types.

Suitably, the fusion system 12 forms part of the above-mentioned computer-based system 10 in each vehicle 2 (see also Figure 1). The fusion system 12 has an input section 13 to which forecast data in the form of the above-mentioned first set of data 6 from the remote provider 4 is fed.

Consequently, the input section 13 will receive a preliminary forecast which will constitute one or multiple forecasts given different possible scenarios, each with a given probability. The forecast/-s will constitute a prediction of the road condition prior to making any observations which are related to the vehicle 2 and the sensor system 8.

Also, data from the sensor system 8 is also fed to the input section 13, i.e. in the form of the above-mentioned second set of data 9. This means that the input section 13 is fed with observations made from a sensor system 8 providing information on the road weather conditions, or alternatively an environmental condition in the surroundings of the vehicle 2, or alternatively a current condition of operation of the vehicle 2, installed on the vehicle 2. The sensor observations will be used to update the prediction given by the forecast.

The input information to the fusion system 12 constitutes all valuable and fusible signals provided by forecast and the onboard sensor together with its corresponding uncertainties. Examples of signals are listed below:

- road surface temperature;
- air temperature;
- dewpoint;
- relative Humidity;
- wind Speed;
- water amount;
- road condition class;
- slipperiness indication; and
- friction coefficient

Some information delivered by the forecast is constant, however still desirable to provide to a user. Such signals will not be processed by the fusion system 12, but simply passed through.

With reference to Figure 2, it should be noted that the fusion system 12 provides a fusion process in which the first set of data 6 is combined with the second set of data 9 for obtaining said updated and optimized forecast. This updated forecast is supplied at an output section 14, which feeds output data in the form of a the optimized forecast information to certain applications, suitably a first application 15 in the vehicle 2 which is related to advanced driver-assistance systems (ADAS) or possibly also autonomous driving (AD), in which the updated forecast data can be used. As a second option, the optimized forecast information is transmitted to an online application programming interface (API) 16. As a further option, the optimized forecast information can be transmitted via the application programming interface 16 to a remote storage, such as a so-called cloud storage 17, which is provided with a database for storing the output set of data. The data can then be available and transmitted to other users, for example by feeding it to the remote provider 4 and making it accessible in the form of the above-mentioned first set of data 6.

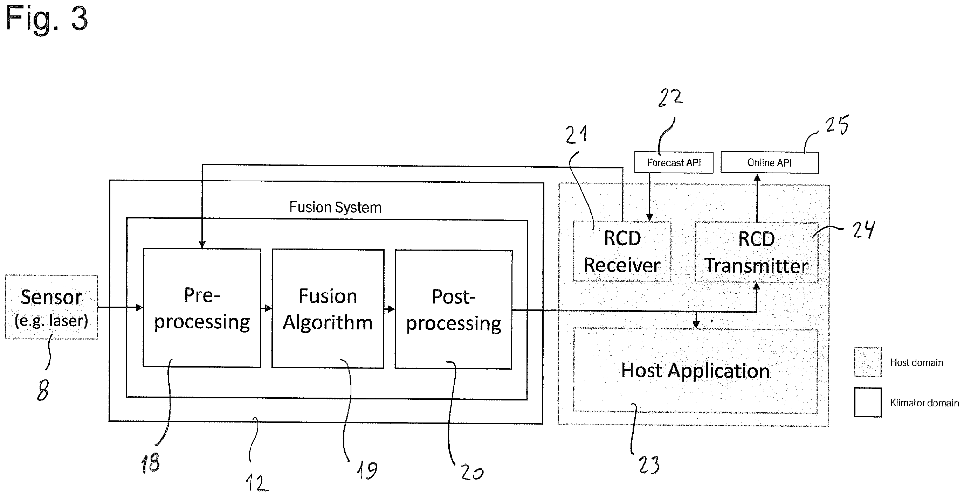

As mentioned above, the first set of data 6 is combined with the second set of data 9 in a fusion process for obtaining an updated and optimized forecast. According to an embodiment, this process involves a pre-processing stage, a fusion algorithm stage and a post-processing stage. Generally, however, it should be noted that any combination of these stages can in principle be used. According to an embodiment which is shown in Figure 3, in which the fusion system 12 is shown in an alternative manner, it is indicated that the fusion system 12 can be divided into three parts, or processes, more precisely a pre-processing step 18, a fusion algorithm step 19 which combines the observations from multiple sources, i.e. suitably the first set of data 6 and the second set of data 9, and a post-processing step 20. The post-processing step 20 is implemented in order to apply climatological knowledge, optimize performance for certain scenarios and apply the effects of winter maintenance measures not predicted.

The input to the pre-processing step 18 is received within the host vehicle domain through a receiver 21 adapted for the forecast API 22.

The sensor system 8 input is received through a connection within the software of the computer system 10 of the vehicle 2 (see Figures 1 and 2), assuming that the two systems are executed within the same domain.

In the pre-processing step 18 we draw some conclusions on the sensor input 8 and may potentially apply prevention of observed misbehavior.

A part of the post-processing step 20 is to counter-act and prevent observed scenarios of misbehavior. In other words, this step compensates for any faults or ignorance in the fusion system 12 or in any of the sensor 8 inputs.

The main input to the fusion system 12 is the forecast from the remote provider 4. The forecast will constitute of one or multiple forecasts given different scenarios and provided with a corresponding probability, as described above.

There are multiple possible procedures for updating and optimizing one or multiple forecasts from the remote provider 4. An example procedure is that the set of probable forecasts are combined and provided as the prior distribution to the fusion step. In the case of the set of probable forecasts constituting of simply one forecast, that forecast would instantly be set as the prior distribution. The combined forecast is altered to more resemble the measurement in the fusion step. In the post-processing step, the posterior distribution would be matched to the most similar forecast (or potentially a mix of them) and inherit the rest of its properties, which has not been measured and thus updated.

The fusion algorithm process 19 may constitute a customized version of a classic sensor fusion algorithm, e.g., Kalman filtering, made suitable for the present disclosure. Classic filtering may be divided in two parts, being the prediction step, where we predict what road condition we will face resulting in a predicted density, followed by the update step, where we update our prediction with measurements which result in a posterior density being our output for each time step as well as the input to the prediction step for the next time step.

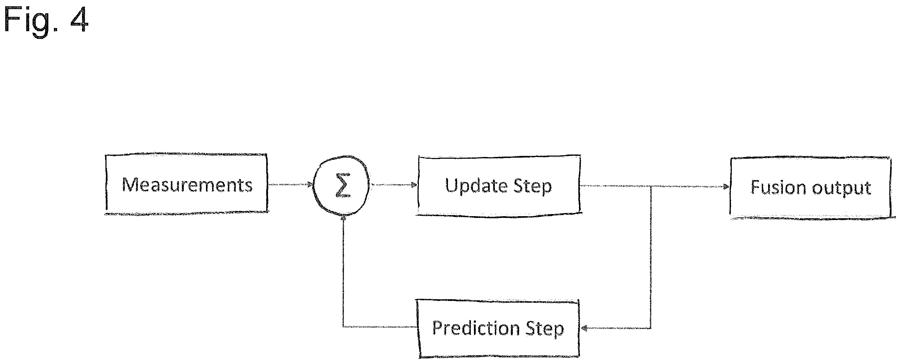

It should be noted that Figure 4 shows the basic concept of sensor fusion, according to an embodiment.

To apply this general theory in the context of edge computed road condition great insights in climatology and empirical studies of comprehensive data are required. An initial approach is that a vehicle will include road condition information in the fusion calculations for a predefined range, e.g. 1 km, and predictions will be made separately for the road sections contained within that range. As soon as a new road section appears within the predefined 1 km range, that section will be initiated with the predicted forecast. When updating the road section, the distance to it as well as the climatological difference to the current section will be considered. Consequently, it can be learned, from the present road section, how the upcoming sections might differ from the forecast prior to facing them.

The prediction step (see Figure 4) is where we define our prior distribution, i.e. our prediction of what the current state is. The prior distribution would preferably consist of the nowcast, from the remote provider 4, for the first initialization of a road section. It is considered to be a good yet unmeasured prediction. However, for road sections already initialized, the prior distribution would rather consist of the posterior distribution from the previous update step passed through a motion model, given that there is one, or that the conditions have not just changed, i.e. we just made a turn off the highway etc.

It should be noted that the term "nowcast" refers to the prediction of all road sections in the present point of time. This is as opposed to a "forecast", which describes certain conditions before they actually occur.

The prediction step is shown in the equations below according to principles in which the prediction step equations are associated with a standard Kalman filter.

$$\hat{x}_{k|k-1} = A_{k-1}\hat{x}_{k-1|k-1}$$

$$P_{k|k-1} = A_{k-1}P_{k-1|k-1}A^T_{k-1} + Q_{k-1}$$

Furthermore, in an update step we update our prior distribution with observations made in real-time from the output of information from the the sensor system 8 in the vehicle 2, such as from a laser, for instance. The observations made are associated with a measurement model matrix and an estimated measurement noise determining to what extent the measurement should be trusted, and how to interpret it.

Combining of the measurement model matrix, measurement noise and measurement in traditional Kalman filtering are done by calculating the product of the Kalman Gain, $K_k$, and the Innovation, $v_k$. Doing so, a correction term is obtained in order to update the prior mean. Merging the prior mean and correction term result in a posterior mean $\hat{x}_{k|k}$, which may be seen in the below equations.

$$K_k = P_{k|k-1}H_k^TS_k^{-1}$$

$$v_k = y_k - H_k\hat{x}_{k|k-1}$$

$$\hat{x}_{k|k} = \hat{x}_{k|k-1} + K_kv_k$$

In order to achieve the posterior covariance, $P_{k|k}$, we subtract the prior covariance with the Kalman Gain, $K_k$, and the Innovation covariance, $S_k$, who reflect to what extent the measurement is informative.

$$S_k = H_kP_{k|k-1}H_k^T + R_k$$

$$P_{k|k} = P_{k|k-1} - K_kS_kK_k^T$$

The combination of posterior mean and covariance constitutes both the output from the fusion algorithm at each time step as well as the input to the prediction in the upcoming time step.

The components in the Kalman filter represent different information about the system. The Kalman Gain, $K_k$, determines how much we should trust the new information. The Innovation covariance, $S_k$, is the predicted

covariance of the measurement. The Innovation, $v_k$, captures the new information in our measurement.

The update step equations are suitably associated with a standard Kalman filter.

Furthermore, in the post-processing step 20 (see Figure 3) we utilize the fused posterior distribution of our output signals, extract further information from the deviation from the prediction and draw conclusions on a larger scale. A few of the functions to exist within the post-processing step are further documented below.

**Road section update**

This is where we apply the posterior distribution from the fusion algorithm and the insights learnt from it to a well-balanced set of upcoming road segments. The difference in road segment specification will be taken into consideration while applying deep knowledge in road climatology when doing so. For small deviations in risk-free situations between the prediction and the update this will have little impact, however, to give insights into when the update is of greatest utility a few examples have been listed below.

**Example 1.**

The host vehicle travels along a highway in minus degrees air temperature, but where the road surface temperature is well above zero degrees Celsius. We have predicted the road to most likely be completely dry but start to make continuous detections of wet road. A scenario with non-dry road is therefore favored. This makes little difference for safety on the current section, but a nearby bridge with less heat capacity will likely be frozen under these conditions. Normally this would be no issue due to the road surface temperature being above zero degrees. However, we know that an upcoming road section contains a bridge which are known for being immensely affected by air temperature and wind likely reducing the road surface temperature in comparison to adjacent road sections. We would in this case be able to predict a substantial risk of slipperiness on the bridge, where there previously was none, and take precautions.

**Example 2.**

The host vehicle travels along a highway being predicted as filled with snow. We make detections of no snow as well as wet surface on a road of temperature below zero degrees Celsius. We are then able to draw the conclusion that a winter maintenance measure has been carried out and furthermore determine what measure it was. The same measure may then be applied for each road section up until the next highway exit or even further if we also know the standard winter maintenance route for that road.

Regarding signal update, the posterior distribution of our signals might be vastly different from one of the fusion inputs. We might find scenarios where, for instance, numerical signals are conflicting with the road condition of highest probability. If we know the numerical signals to be more certain than the road condition classification, then the road condition probabilities may be altered to the corresponding signals of high certainty.

Furthermore, a part of the post-processing step will be to counter-act and prevent observed scenarios of misbehavior. In other words, this step compensates for any faults or ignorance in the fusion system or in any of the sensor inputs.

The designated consumer or user of the process implemented by the fusion system 12 is an ADAS or AD application within the automotive industry, as indicated by means of reference numeral 23 in Figure 3. The fusion system 12 will provide the refined output from a forecast from a remote provider 4 and onboard sensor system and constitute the interface towards the consumer. Therefore, it is crucial that the fusion system 12 is compliant with set requirements from an automotive producer.

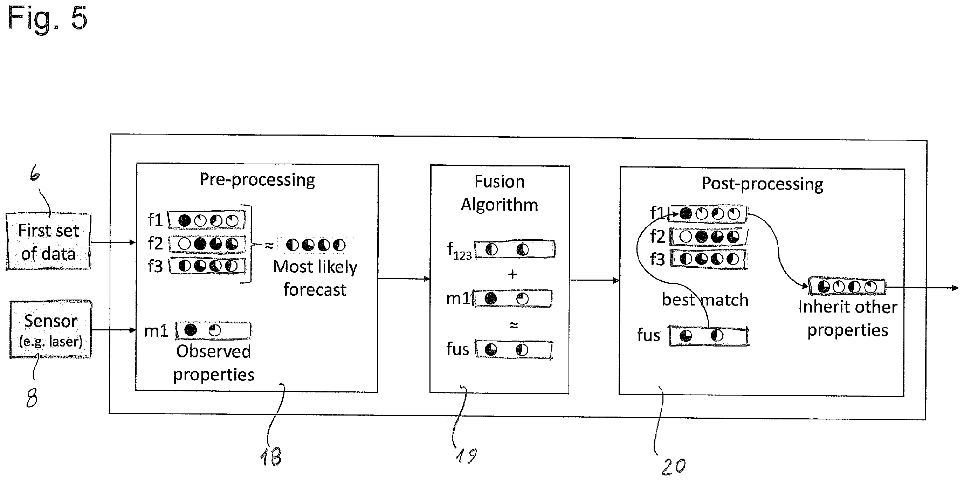

Furthermore, Figure 5 shows a visualization of how some of the functionalities in the different sections of the fusion system 12 could be designed. There are multiple possible procedures for updating and optimizing forecasts. The example visualized in Fig 5 describes how the set of probable forecasts (f1, f2, f3), generally corresponding to the first set of data 6, are combined and provided as the prior distribution to the fusion step. The second input to the fusion system is observations (m1) from measurements by means of the sensor system 8 in the vehicle 2. In the case of the set of probable forecasts constituting of simply one forecast, that forecast would instantly be set as the prior distribution. The circles inside each forecast are representing values for the different road condition properties, altogether constituting a forecast. As mentioned above, the combined forecast is altered to more resemble the measurement in the fusion step. In the post-processing step 20 the posterior distribution would be matched to the most similar forecast (or potentially a mix of them) looking at the observed properties and inherit the rest of its properties, which have not been measured and thus updated.

The output from the fusion system 12 will result in all the input parameters and its corresponding uncertainties if any, however refined and fused from the two or multiple sources. According to the disclosure, the fused result will be much more accurate, less uncertain and adapt to unexpected scenarios than previously known systems and methods. Some of the key deliverables are documented below.

The output will be consumed by both the host application 23 (see Figure 3), probably being an ADAS or AD application, and an in-vehicle transmitter 24 sending points of measurement or the updated forecast over an online API 25 to an online cloud storage of mobile observations and updated forecasts. This is most likely transmitted over 4G/5G connection, however, entirely provided by the host.

Certain key deliverables will now be discussed.

**Road friction coefficient**

Regarding the output of road friction, the system may face three different setups and will deliver the parameter accordingly. The three setups available are the following:

> 1) a sensor provides road friction observations (believed to be the ground truth since tires are taken into account)
> 2) a sensor provides road friction estimates from road observations
> 3) a sensor provides information about the environment (e.g., air temperature)

For the different setups our system may either apply different confidence to the estimates of the upcoming conditions or deliver three different signals corresponding to the current setup. Regarding validation, it is difficult to validate performance of the entire system due to a lack of ground truth reference, however the performance of fusion is on the contrary able to validate with the later observed data.

**Slipperiness level**

A signal describing the risk of reduced friction coefficient, potentially to multiple extents. It could either be a flag describing whether the vehicle may face reduced friction coefficient or not. It could also constitute of multiple flags describing whether the vehicle may face reduced friction coefficient below [1, 0.8, 0.6, 0.4, 0.2] for instance. It could furthermore constitute of a probability between 0 and 1 to whether the vehicle faces slippery conditions.

**Road condition**

The road condition class parameter contains information regarding what road condition that the vehicle most likely faces. The different classes contained are the following:

- Dry
- Wet
- Snow
- Ice

The principles of a method according to the disclosure have now been described. It should be noted that the disclosure also relates to a computer-based system 10 in a vehicle 2, for determining an updated and optimized forecast relating to at least a weather or a road condition of a road section 3 in a network 1 of roads. The system 10 comprises: a vehicle communication unit 7 which is configured for receiving a first set of data 6 of information related to at least a weather or a road condition in at least said road section 3 from a remove provider 4, said first set of data 6 corresponding to said forecast; and a set 8 of sensor devices providing a second set of data 9 based on at least the operation of the vehicle 2 or present conditions in the surroundings of the vehicle 2. Furthermore, said system 10 is configured to combine said first set of data 6 with said second set of data 9 for obtaining said updated and optimized forecast, and for providing the updated and optimized forecast to a user.

The invention is not limited to the embodiments described above but can be varied within the scope of the appended claims.

**Claims**

1. A method for operating a computer-based system (10) in a vehicle (2), for determining an updated and optimized forecast relating to at least a weather or a road condition of a road section (3) in a network (1) of roads, said method comprising the following steps:

> providing a first set of data (6) from a remote provider (4) of information related to at least a weather or a road condition in at least said road section (3), said first set of data (6) corresponding to said forecast;
> transmitting said first set of data (6) to said vehicle (2); and
> providing a second set of data (9) based on at least the operation of the vehicle (2) or present conditions in the surroundings of the vehicle (2);

> **characterized in that** said method furthermore comprises the steps of:

> combining, in said computer-based system (10), said first set of data (6) with said second set of data (9) for obtaining said updated and optimized forecast; and
> providing the updated and optimized forecast to a user.

2. Method according to claim 1, wherein said method further comprises:

> providing said first set of data (6) in the form of a set of parameters (P) indicating road condition information being associated with said road section (3) and being valid during a pre-determined period of time.

3. Method according to claim 2, wherein said method further comprises:

> providing said first set of data (6) in the form of at least one of the following parameters (P1-P7), which are provided as either values or probability distributions:

- a temperature value of the road surface of said road section (3);
- an amount of precipitation being collected on the road surface of said road section (3);
- an air temperature associated with said road section (3);
- a dew point associated with said road section (3);
- a wind speed associated with said road section (3);
- a road condition class associated with said road section (3);
- a friction coefficient of the road surface of said road section (3);
- a hazard level associated with said road section (3); and
- a slipperiness indication associated with said road section (3).

4. Method according to claim 3, wherein said method further comprises:

associating at least one of said parameters (P1-P7) with a predicted uncertainty related to a deviation of a parameter value or a probability related to a parameter, at a given point in time.

5. Method according to claim 3 or 4, wherein said method further comprises:

allowing access to said parameters via an online application programming interface (API).

6. Method according to any one of the preceding claims, wherein said method further comprises:

providing said second set of data (10) by onboard system data obtained in said vehicle (2); said onboard system data corresponding to a road condition presently existing in the vicinity of said vehicle (2), an environmental condition in the surroundings of the vehicle (2), or a current condition of operation of the vehicle (2), or any combination of said conditions.

7. Method according to claim 6, wherein said method further comprises:

providing said onboard system data in the form of measurement data from at least one sensor system (8) arranged in the vehicle (2).

8. Method according to claim 7, where said method further comprises:

providing said measurement data from at least one of the following sensors or signals being associated with the sensor system (8) in the vehicle (2):

- a laser-based sensor or signal;
- a temperature sensor or signal;
- a wheel-slip sensor or signal;
- a traction control sensor or signal;
- a rain sensor or signal;
- a Lidar sensor or signal;
- an ESP activation signal; and
- an optical sensor or camera;

said measurement data indicating information related to at least one of the following parameters related to said road section (3):

- a road friction coefficient;
- a hazard level;
- a road surface temperature;
- a road condition class, and
- a slipperiness indication associated with said road section (3).

9. Method according to any one of the preceding claims, said method further comprising:

combining said first set of data (6) with said second set of data (10) in a fusion process which involves a pre-processing stage or a fusion algorithm stage or a post-processing stage, or a combination of said stages.

10. Method according to claim 9, said method further comprising:

feeding an output set of data from said fusion process to at least one of the following destinations:

- an application in said vehicle (2) related to advanced driver-assistance systems (ADAS) or autonomous driving (AD);
- an online application programming interface (API); and
- a remote storage for said output set of data.

11. Method according to claim 9 or 10, said method further comprising:

providing a pre-processing stage which compensates for detected faults or ignorances in said computer-based system (10) or related to said second set of data (9).

12. Method according to any one of claims 9-11, said method further comprising:

providing a fusion algorithm stage comprising a prediction and updating process implemented by means of Kalman filtering and smoothing, or any other suitable similar algorithm.

13. Method according to any one of claims 9-12, said method further comprising:

    providing a post-processing stage utilizing a fused posterior distribution of output data.

14. A computer-based system (10) in a vehicle (2), for determining an updated and optimized forecast relating to at least a weather or a road condition of a road section (3) in a network (1) of roads, said system (10) comprising:

    a vehicle communication unit (7) which is configured for receiving a first set of data (6) of information related to at least a weather or a road condition in at least said road section (3) from a remove provider (4), said first set of data (6) corresponding to said forecast; and
    a set (8) of sensor devices providing a second set of data (9) based on at least the operation of the vehicle (2) or present conditions in the surroundings of the vehicle (2); **characterized in that** said system (10) is furthermore configured to combine said first set of data (6) with said second set of data (9) for obtaining said updated and optimized forecast, and for providing the updated and optimized forecast to a user.

15. A computer readable medium comprising computer executable instructions, which when executed by a processor of a computer-based control unit (10), cause the processor to control the control unit (10) to perform the steps of a method according to any one of claims 1-13.

Fig. 1

FIG. 2

Input 13

6

RCD data

Sensor data

9

Hardware in vehicle

Fusion system

(optimizing prediction)

12

Output 14 16

RCD Mobile API

Cloud storage 17

ADAS/AP app in vehicle

15

EP 4 215 877 A1

Fig. 3

Sensor (e.g. laser) — 8

Fusion System — 12

Pre-processing — 18

Fusion Algorithm — 19

Post-processing — 20

RCD Receiver — 21

Forecast API — 22

Online API — 25

RCD Transmitter — 24

Host Application — 23

Host domain

Klimator domain

# Fig. 4

```
┌──────────────┐       ╭───╮      ┌──────────────┐            ┌──────────────┐
│ Measurements │──────▶│ Σ │─────▶│ Update Step  │──────────▶│ Fusion output│
└──────────────┘       ╰───╯      └──────────────┘            └──────────────┘
                         ▲                  │
                         │                  │
                         │        ┌──────────────┐
                         └────────│ Prediction Step│◀─────────
                                  └──────────────┘
```

Fig. 5

EP 4 215 877 A1

Europäisches Patentamt
European Patent Office
Office européen des brevets

**EUROPEAN SEARCH REPORT**

Application Number

EP 22 15 2737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 889 583 A1 (CONTI TEMIC MICROELECTRONIC [DE]; CONTINENTAL TEVES AG & CO OHG [DE]) 1 July 2015 (2015-07-01) * paragraphs [0002], [0005], [0013], [0022] – [0026] * * paragraphs [0034], [0049], [0062] * * figures 1,2 * | 1-15 | INV. G01C21/36 B60W40/02 G08G1/01 |
| X | EP 3 581 454 A1 (VOLVO CAR CORP [SE]) 18 December 2019 (2019-12-18) * paragraphs [0001], [0007] * * paragraphs [0011], [0012], [0015] – [0017] * * figures 2,3 * | 1-15 | |
| A | DE 10 2015 225094 A1 (BOSCH GMBH ROBERT [DE]) 14 June 2017 (2017-06-14) * paragraphs [0005], [0015], [0017] * * paragraph [0044] – paragraph [0051] * * paragraphs [0051], [0077] * * figures 1-5 * | 1-15 | |
| A | EP 2 757 539 A1 (ROADIT AB [SE]) 23 July 2014 (2014-07-23) * the whole document * | 1-15 | TECHNICAL FIELDS SEARCHED (IPC) G01C B60W G08G G01W G06V |

The present search report has been drawn up for all claims

| Place of search | Date of completion of the search | Examiner |
|---|---|---|
| The Hague | 11 July 2022 | Yosri, Samir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 2737

This annex lists the patent family members relating to the patent documents cited in  the above-mentioned European search report.
The members are as contained in the European Patent Office EDP file on
The European Patent Office is in no way liable for these particulars which are merely given for the purpose of information.

11-07-2022

| Patent document cited in search report | | Publication date | Patent family member(s) | | Publication date |
|---|---|---|---|---|---|
| EP 2889583 | A1 | 01-07-2015 | DE 102013226631 | A1 | 25-06-2015 |
| | | | EP 2889583 | A1 | 01-07-2015 |
| EP 3581454 | A1 | 18-12-2019 | EP 3581454 | A1 | 18-12-2019 |
| | | | US 2019376811 | A1 | 12-12-2019 |
| | | | US 2021041261 | A1 | 11-02-2021 |
| DE 102015225094 | A1 | 14-06-2017 | NONE | | |
| EP 2757539 | A1 | 23-07-2014 | DK 2757539 | T3 | 24-08-2020 |
| | | | EP 2757539 | A1 | 23-07-2014 |
| | | | ES 2812627 | T3 | 17-03-2021 |
| | | | LT 2757539 | T | 10-09-2020 |
| | | | PL 2757539 | T3 | 02-11-2020 |
| | | | SI 2757539 | T1 | 30-10-2020 |
| | | | US 2015356867 | A1 | 10-12-2015 |
| | | | WO 2014114684 | A1 | 31-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9799219 B